# FASCICULE DE BREVET EUROPEEN

(11) **EP 2 723 643 B1**
(45) Date de publication et mention de la délivrance du brevet: **22.04.2020**
(21) Numéro de dépôt: 12730893.0
(22) Date de dépôt: 21.06.2012
(51) Int. Cl.: B64D 45/00

(54) **DISPOSITIF COMBINÉ DE BALISE DE SECOURS ET ENREGISTREUR DE VOL POUR AERONEF ET AERONEF ÉQUIPÉ D'UN TEL DISPOSITIF**
KOMBINATION AUS RETTUNGSBAKE UND FLUGSCHREIBER FÜR EIN FLUGZEUG UND FLUGZEUG MIT EINER DERARTIGEN VORRICHTUNG
COMBINED RESCUE BEACON AND FLIGHT RECORDER DEVICE FOR AN AIRCRAFT, AND AIRCRAFT PROVIDED WITH SUCH A DEVICE

(30) Priorité: 21.06.2011 FR 1155441
(43) Date de publication de la demande: 30.04.2014
(73) Titulaire: AIRBUS (SAS), 31700 Blagnac (FR)
(72) Inventeur: SMAOUI, Hichem, 75007 Paris (FR); JOUBERT, Emmanuel, 92130 Issy Les Moulineaux (FR); BERMUDEZ, Michel, 92150 Suresnes (FR); ARGILLIER, Fabien, 92100 Boulogne-Billancourt (FR); PELEGRIN, Thierry, 78220 Viroflay (FR)
(74) Mandataire: Gicquel, Olivier Yves Gérard
(86) Numéro de dépôt international: PCT/EP2012/061987
(87) Numéro de publication internationale: WO 2012/175619

(56) Documents cités:
- WO-A1-2011/010942
- CH-A2- 701 262
- US-A- 2 552 969
- US-A- 2 959 671
- US-A- 3 140 847
- US-A- 4 009 051

## Description

La présente invention concerne un dispositif combiné balise de secours et enregistreur de vol flottant et fonctionnant totalement ou en partie grâce à l'énergie solaire pour aéronef et un aéronef équipé d'un tel dispositif.

Il est connu d'équiper les aéronefs d'enregistreurs de vol généralement disposés dans une partie peu susceptible de subir de sévères dégradations en cas d'accident.

Les enregistreurs de vol dits "boîtes noires" sont des équipements de sécurité obligatoires sur les avions de transport.

Ils enregistrent de nombreux paramètres de vol et les conversations cockpit et constituent un outil important pour la détermination et l'explication des circonstances et des causes d'un accident ou d'un incident d'aviation civile.

Les enregistreurs de vols sont conçus pour que leur contenu résiste à de fortes contrainte : une accélération supérieure à 3 400 g, une température de 1 100 °C pendant une heure, un mois d'immersion à sx mille mètres de profondeur.

A ce jour, les difficultés rencontrées pour récupérer les enregistreurs de vols en cas d'accident soulèvent des questions au sujet de l'adéquation de la technologie existante de récupération de données de vol pour les accidents au-dessus des régions océaniques ou éloignées.

Il est connu de réaliser des enregistreurs de vol éjectables et notamment le document US 3 140 847 décrit un enregistreur éjectable placé dans la pointe arrière du fuselage d'un aéronef et le document CH 701 262 décrit un enregistreur éjectable muni d'un parachute et se logeant sur un côté du fuselage avant l'emplanture de la dérive.

Le document US2959671 décrit un enregistreur de vol disposé à l'arrière d'un aéronef, cet enregistreur comprenant un indicateur de position de collision résistant aux chocs. Les parties vides sont remplies avec une mousse plastique. Une peau externe conique du dispositif remplace une partie de la peau externe de l'avion.

Le document US4009051 décrit un dispositif de bloc d'alimentation solaire adaptable pour alimenter des équipements de secours.

Au vu de cet art antérieur, la présente invention propose un dispositif combiné balise de secours et enregistreur de vol selon la revendication 1.

Avantageusement le dispositif comporte une batterie d'alimentation de la balise de secours et de l'enregistreur de vol reliée au panneau solaire, le dispositif comportant ainsi une source d'alimentation autonome, dispositif à poste dans l'aéronef ou dispositif éjecté.

Préférablement, le dispositif est tel que son rapport poids/surface portante est adapté à lui donner une portance telle que sa chute libre après éjection est une chute freinée.

Selon un mode de réalisation particulier, le dispositif de l'invention comporte des moyens de freinage aérodynamiques rétractables déployables après éjection.

Selon un mode de réalisation avantageux, le dispositif comporte des moyens de liaison sans contact électrique tels que des moyens optiques et/ou des moyens radio avec des systèmes de l'aéronef.

Selon un mode de réalisation alternatif ou complémentaire, le dispositif comporte des moyens de connexion électrique déconnectables avec des systèmes de l'aéronef.

Selon un mode de réalisation particulièrement avantageux, le dispositif comporte une structure sandwich caissonnée intégrant la balise et l'enregistreur et formant toute ou partie desdits moyens de flottaison.

Préférablement, le dispositif de l'invention comporte des moyens de mesure d'une accélération et/ou taux de chute et/ou de choc et des moyens de largage activables sur dépassement d'une valeur d'accélération et/ou taux de chute seuil et/ou de choc.

Selon un mode de réalisation particulier, le dispositif comporte des moyens d'alimentation complémentaires alimentés par énergies renouvelables notamment éolienne et/ou selon le mouvement des vagues.

L'invention concerne en outre un aéronef comprenant un dispositif combiné balise de secours et enregistreur de vol pour aéronef selon l'invention pour lequel ledit dispositif est conformé en élément de structure dudit élément de voilure dudit aéronef.

Plus particulièrement ledit élément de voilure est une dérive de l'aéronef.

Selon un mode de réalisation particulier, l'élément de voilure comporte des moyens de réception du châssis dudit dispositif sous forme d'un bâti formant un élément structurel de l'élément de voilure.

Avantageusement, le bâti est réalisé en forme de U dans lequel se loge le dispositif à la manière d'un module tiroir amovible.

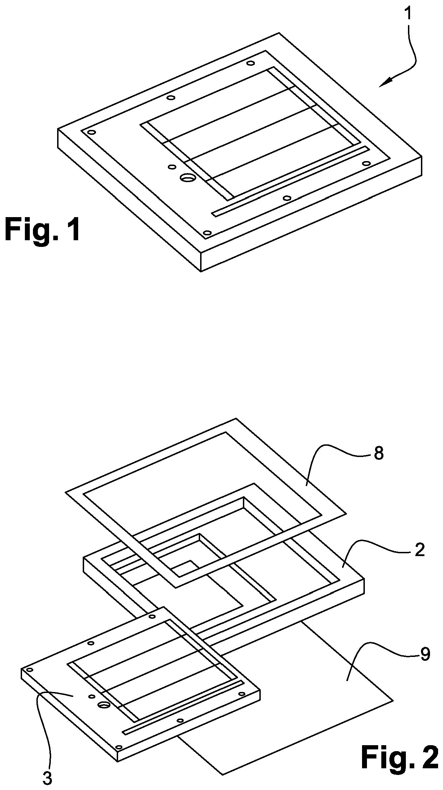

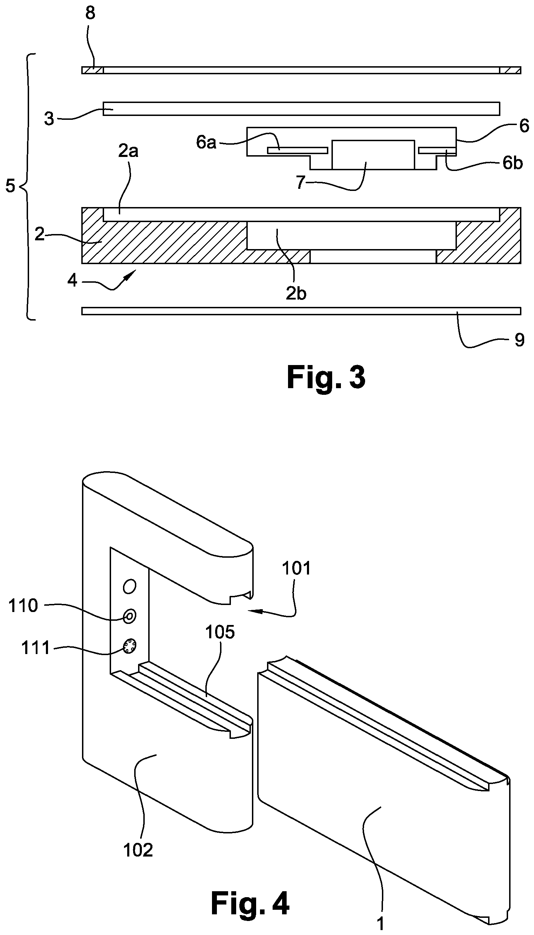

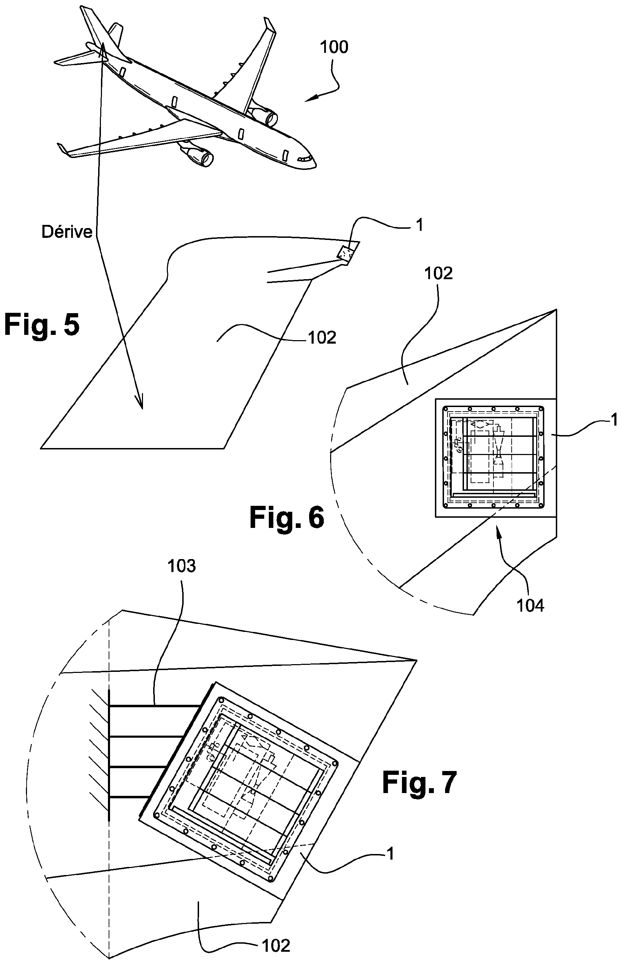

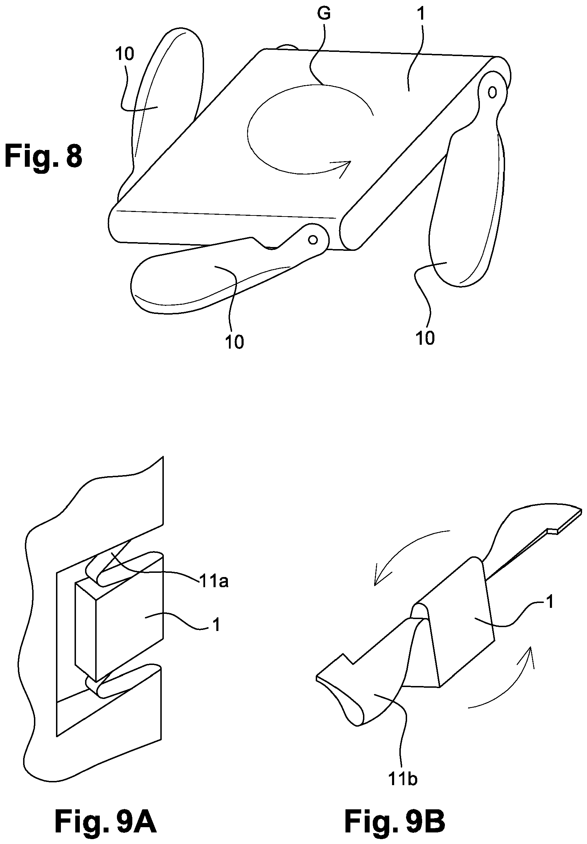

D'autres caractéristiques et avantages de l'invention seront apparents à la lecture de la description qui suit d'un exemple de réalisation non imitatif de l'invention en référence aux dessins qui représentent :
en figure 1 : une vue en perspective d'un exemple schématique de réalisation d'un dispositif selon l'invention ;
en figure 2 : une vue en perspective éclaté du dispositif de la figure 1 ;
en figure 3 : une vue de côté partiellement en coupe du dispositif représenté à la figure 2 ;
en figure 4 : une vue en perspective d'un détail d'implantation d'un exemple de réalisation du dispositif de l'invention dans un élément de voilure d'aéronef ;
en figure 5: une vue d'un aéronef et d'un exemple de positionnement d'un dispositif selon l'invention;
en figure 6: une vue agrandie de l'implantation du dispositif selon la figure 5;
en figure 7: un exemple de fixation du dispositif selon la figure 6.
en figure 8: un premier exemple de réalisation d'un dispositif de l'invention pourvu d'ailettes déployables;
aux figures 9A et 9B: un second exemple de réalisation d'un dispositif de l'invention pourvu d'ailettes déployables.

L'invention a pour but de proposer un système de balise de secours et enregistreur de données de vol intégré à la structure, éjectable, flottant et fonctionnant entièrement ou en partie grâce aux énergies renouvelables.

La solution proposée par la présente invention permet de prévoir dès la conception de l'aéronef, l'installation d'un dispositif comprenant un système d'enregistrement de données de vol et une balise de détresse, ce dispositif étant intégré à la structure de l'aéronef.

En outre le dispositif est positionné en sorte d'être éjectable automatiquement avec ou sans intervention de l'équipage lors de la détection d'un impact fort de l'appareil ou d'une chute brutale.

Le dispositif 1 de l'invention est représenté en perspective à la figure 1.

Selon la figure 2, vue éclatée de la figure 1, le dispositif comporte un châssis 2 pourvu d'au moins une face latérale externe munie d'un panneau solaire 3.

Le châssis 2 est complété selon cet exemple par une peau ajourée 8 et un fond 9.

Le panneau solaire 3, équipé éventuellement de ses modules de pilotage et de régulation, s'insère comme représenté en figure 3 dans une découpe 2a du châssis 2 au dessus d'un module électronique 6 regroupant une batterie 7, la balise 6a et le module enregistreur de vol 6b.

Avantageusement, Le panneau solaire 3, le module électronique 6 regroupant une batterie 7, la balise 6a et le module enregistreur de vol 6b sont fixés sur le châssis 2 de manière a permettre une maintenance aisée dudit dispositif.

Le module électronique 6 est disposé dans une seconde découpe 2b du châssis refermé en face latérale interne par un fond 9.

Selon les exemples des figures 4 et 6 notamment, le dispositif 1 se positionne dans un logement réalisé dans un élément de voilure 102 de l'aéronef.

Selon la figure 4, le logement est ouvert sur deux faces de l'élément de voilure 102, ici la dérive d'un avion.

Selon la figure 6, le logement est ouvert sur au moins une des deux faces de la dérive 102.

Dans le cas de la figure 4, le dispositif comporte des panneaux solaires sur ses deux faces latérales, un panneau solaire remplaçant le fond 9 de la figure 3, et est conformé en élément de panneau aérodynamique 104 sur les deux faces dudit élément de voilure 102.

Dans le cas de la figure 6, le dispositif est conformé en élément de panneau aérodynamique 104 sur une face dudit élément de voilure 102.

Selon la figure 4, le dispositif est reçu dans un berceau 105 rigide de sorte que le dispositif et son berceau sont conformés en élément de structure de l'élément de voilure 102 de l'aéronef, sa structure étant adaptée à reprendre les efforts subis par la structure de l'aéronef en vol dans cette partie d'élément de voilure et en cas d'impact brutal, le berceau conservant ses caractéristiques structurelles suite à l'éjection du dispositif.

Comme vu plus haut, le dispositif comporte une batterie 7 d'alimentation de la balise de secours et de l'enregistreur de vol reliée au panneau solaire, le dispositif comportant ainsi une source d'alimentation autonome, dispositif à poste dans l'aéronef ou dispositif éjecté.

Pour recevoir les données des paramètres de vol ou enregistrer les conversations dans le cockpit de manière traditionnellement connue dans la fonction enregistreur de vol, le dispositif comporte des moyens de liaison avec les équipements concernés de l'avion ou aéronef, ces moyens pouvant être des moyens sans contact électrique, tels que des moyens optiques et/ou des moyens radio et/ou des moyens de connexion électrique déconnectables avec des systèmes de l'aéronef.

Ces moyens sont schématisés en figure 4 sous la référence 110 pour un moyen optique et 111 pour un moyen de connexion électrique déconnectable par exemple un connecteur à contacts pistons connu dans la technique.

De retour à la figure 3, les systèmes électroniques sont intégrés dans une structure de rigidification telle qu'une mousse ou un nid d'abeille 4 de type structure auto-raidie recouverte par une enveloppe composite ou métallique formée par le couvercle 8 intégrant le panneau solaire 3 et l'antenne émettrice de la balise.

L'ensemble est étanche et flottant.

La flottaison du dispositif est obtenue grâce à son intégration dans une structure sandwich caissonnée 5 intégrant la balise 6a et l'enregistreur 6b, le tout ayant un rapport masse/volume adapté.

La figure 7 représente un exemple de fixation du dispositif dans l'élément de voilure de l'aéronef, ici une dérive d'avion, le dispositif étant relié à l'élément de voilure par des moyens d'ancrage 103 comportant des moyens de largage ou d'éjection du dispositif, de type électrique, mécanique, pneumatique ou pyrotechnique.

L'aéronef comporte des moyens de réception du châssis dudit dispositif sous forme d'un bâti en forme de U 105 dans lequel se loge le dispositif 1 à la manière d'un module tiroir amovible ce qui facilite son largage et sa maintenance.

Le dispositif comporte des moyens de mesure d'une accélération et/ou taux de chute et les moyens de largage ou d'éjection sont activables sur dépassement d'une valeur d'accélération et/ou choc et/ou taux de chute seuil pour réaliser l'éjection du dispositif.

Les moyens de largage sont activés préférentiellement avant le crash ou au moment même de l'impact de l'appareil à l'aide des moyens de mesure d'accélération et/ou taux de chute, les moyens de mesure étant par exemple constitués de un ou plusieurs accéléromètres un altimètres ou autre moyen adapté à détecter une situation d'accident.

Les moyens de largage peuvent aussi être activables à la demande du pilote.

Pour ralentir sa chute et préserver l'intégrité de ses composants électroniques, le dispositif combiné balise de secours et enregistreur de vol peut être tel que son rapport poids/surface portante associé à un système d'ailette déployable après éjection sont adaptés à lui donner une portance telle que sa chute libre après éjection est une chute freinée, notamment en feuille morte ce qui limite son impact lors de sa chute.

L'exemple de la figure 8 représente un dispositif combiné balise et enregistreur 1 comportant des ailettes déployables sous la forme de pales 10 adaptées à s'incliner par rapport au plan du dispositif et à donner au dispositif un mouvement giratoire G en le freinant dans sa chute.

L'exemple des figures 9A et 9B prévoit des ailettes 11a, 11b repliées dans la position 11a lorsque le dispositif 1 est dans son logement et déployées en position 11b lorsque le dispositif est libéré de son logement, ces ailettes déployées par des moyens ressorts formant une hélice ralentissant la chute du dispositif par auto-rotation, les ailettes constituant des moyens de freinage aérodynamiques rétractables.

Dans une version enrichie, le dispositif comporte des moyens d'alimentation complémentaires alimentés par énergies renouvelables notamment éolienne et/ou selon le mouvement des vagues.

Pour assurer son alimentation, le dispositif fonctionne entièrement ou en partie par des sources d'énergie renouvelables.

Grâce à l'utilisation d'énergie renouvelable l'autonomie du système est accrue ce qui permet de faciliter l'opération de recherche en mer de l'épave de l'avion, de faciliter l'intervention des secours en mer même en cas de mauvais temps par une localisation continue et durable dans le temps, de suivre le parcours de débris même en cas d'impossibilité d'intervention de secours immédiatement après le crash, de suivre le parcours des possibles rescapés et de mieux comprendre les circonstances de l'accident et d'acquérir les paramètres et données de vol le plus rapidement possible.

Outre l'autonomie accrue de la batterie pendant la dérive du dispositif après éjection, ce concept intégré assure également la charge de la batterie pendant les phases de vol de l'appareil et permet ainsi de le rendre complètement autonome, le dispositif ne nécessitant pas de systèmes de rechargement de la batterie dans l'aéronef.

Le dispositif éjectable est conçu de telle sorte à assurer son détachement par rapport à la structure, toute en conservant son intégrité lors de l'impact sur l'eau.

Il est placée dans une zone de l'appareil préservée des chocs directs par exemple la dérive verticale de l'avion comme représenté aux figures 5 et 6 pour lesquelles le dispositif 1 est disposé au sommet de la dérive 102 et dans sa partie arrière qui offre en outre une position d'exposition au soleil adaptée.

La solution proposée est ainsi un système pouvant s'intégrer comme une pièce de la structure de l'aéronef ou comme une pièce aérodynamique sur une partie d'un aéronef.

Outre l'enregistreur de vol, le dispositif comporte une balise de secours sous la forme d'un émetteur GPS ou d'éléments d'émission divers comme un émetteur hautes et basses fréquences déclenchés à l'éjection du système et émettant un signal de détresse.

Du fait de la faible consommation du dispositif, une version sans batterie peut être étudiée pour un fonctionnement complètement solaire qui procure un gain de masse au détriment d'un fonctionnement discontinu.

Les besoins en puissance d'un tel dispositif sont de l'ordre d'une dizaine de watts/heure par jour ce qui est compatible avec les capacités d'émission et de rechargement par énergie solaire d'une balise en situation de dérive sur un plan d'eau en mouvement.

L'invention qui n'est pas limitée aux exemples représentés, deux dispositifs disposés sur l'empennage arrière d'un avion ou autre élément de voilure pouvant notamment être prévus, peut être utilisée dans différentes situation de localisation ou de recherche d'éléments (aéronefs, navals, etc.). Elle permet d'améliorer l'efficacité de la recherche d'épaves ou de sauvetage suite aux accidents d'avion.

## Revendications

1. Dispositif combiné balise de secours et enregistreur de vol (1) éjectable et flottable pour aéronef (100), comportant une structure de rigidification de type nid d'abeille (4) ou mousse formant un châssis (2), ledit châssis (2) étant pourvu d'au moins une face latérale externe munie d'un panneau solaire (3), ledit dispositif étant adapté à se positionner dans un logement réalisé dans un élément de voilure (102) de l'aéronef (100) et étant conformé en élément de panneau aérodynamique (104) sur les deux faces dudit élément de voilure (102), le rapport masse/volume du dispositif (1) lui conférant sa flottabilité.

2. Dispositif combiné balise de secours et enregistreur de vol pour aéronef selon la revendication 1, **caractérisé en ce qu'**il comporte une batterie (7) d'alimentation de la balise de secours et de l'enregistreur de vol reliée au panneau solaire, le dispositif comportant ainsi une source d'alimentation autonome, dispositif à poste dans l'aéronef ou dispositif éjecté.

3. Dispositif combiné balise de secours et enregistreur de vol pour aéronef selon la revendication 1 ou 2, **caractérisé en ce que** son rapport poids/surface portante est adapté à lui donner une portance telle que sa chute libre après éjection est une chute freinée.

4. Dispositif combiné balise de secours et enregistreur de vol pour aéronef selon la revendication 1, 2 ou 3, **caractérisé en ce qu'**il comporte des moyens de freinage aérodynamiques déployables après éjection.

5. Dispositif combiné balise de secours et enregistreur de vol pour aéronef selon l'une quelconque des revendications précédentes, **caractérisé en ce qu'**il comporte des moyens de liaison sans contact électrique, tels que des moyens optiques et/ou des moyens radio, avec des systèmes de l'aéronef.

6. Dispositif combiné balise de secours et enregistreur de vol pour aéronef selon l'une quelconque des revendications précédentes, **caractérisé en ce qu'**il comporte des moyens de connexion électrique déconnectables avec des systèmes de l'aéronef.

7. Dispositif combiné balise de secours et enregistreur de vol pour aéronef selon l'une quelconque des revendications précédentes, **caractérisé en ce qu'**il comporte une structure sandwich caissonnée (5) intégrant la balise (6a) et l'enregistreur (6b) et formant toute ou partie desdits moyens de flottaison.

8. Dispositif combiné balise de secours et enregistreur de vol pour aéronef selon l'une quelconque des revendications précédentes, **caractérisé en ce qu'**il comporte des moyens de mesure d'une accélération et/ou de choc et/ou taux de chute et des moyens de largage activables sur dépassement d'une valeur d'accélération et/ou taux de chute seuil.

9. Dispositif combiné balise de secours et enregistreur de vol pour aéronef selon l'une quelconque des revendications précédentes, **caractérisé en ce qu'**il comporte des moyens d'alimentation complémentaires alimentés par énergies renouvelables notamment éolienne et/ou selon le mouvement des vagues.

10. Aéronef (100) comprenant un dispositif (1) combiné balise de secours et enregistreur de vol pour aéronef selon l'une quelconque des revendications précédentes, **caractérisé en ce que** ledit dispositif est conformé en élément de structure dudit élément de voilure (102) dudit aéronef.

11. Aéronef selon la revendication 10, **caractérisé en ce que** ledit élément de voilure (102) est une dérive de l'aéronef.

12. Aéronef selon l'une quelconque des revendications 10 et 11, **caractérisé en ce qu'**il comporte des moyens de réception du châssis dudit dispositif sous forme d'un bâti formant un élément structurel de l'élément de voilure.

13. Aéronef selon la revendication 12, **caractérisé en ce que** le bâti est réalisé en forme de U (105) dans lequel se loge le dispositif (1) à la manière d'un module tiroir amovible.

## Patentansprüche

1. Auswerfbare und schwimmfähige kombinierte Vorrichtung aus Notfunkbake und Flugschreiber (1) für ein Luftfahrzeug (100), welche eine wabenförmige oder aus Schaumstoff bestehende Versteifungsstruktur (4) aufweist, die ein Gestell (2) bildet, wobei das Gestell (2) mit wenigstens einer äußeren Seitenfläche versehen ist, die mit einem Solarmodul (3) ausgestattet ist, wobei die Vorrichtung dafür ausgelegt ist, in einer Aufnahme positioniert zu sein, die in einem Tragflächenelement (102) des Luftfahrzeugs (100) ausgebildet ist, und auf den beiden Seiten des Tragflächenelements (102) in Form eines aerodynamischen Beplankungsfeldes (104) ausgebildet ist, wobei das Verhältnis Masse/Volumen der Vorrichtung (1) ihr ihre Schwimmfähigkeit verleiht.

2. Kombinierte Vorrichtung aus Notfunkbake und Flugschreiber für ein Luftfahrzeug nach Anspruch 1, **dadurch gekennzeichnet, dass** sie eine Batterie (7) zur Stromversorgung der Notfunkbake und des Flugschreibers aufweist, die mit dem Solarmodul verbunden ist, wobei die Vorrichtung somit eine autonome Stromquelle aufweist, als im Luftfahrzeug arbeitende Vorrichtung oder ausgeworfene Vorrichtung.

3. Kombinierte Vorrichtung aus Notfunkbake und Flugschreiber für ein Luftfahrzeug nach Anspruch 1 oder 2, **dadurch gekennzeichnet, dass** ihr Verhältnis Gewicht/Auflagefläche dafür ausgelegt ist, ihr einen solchen Auftrieb zu verleihen, dass ihr freier Fall nach einem Auswurf ein gebremster Fall ist.

4. Kombinierte Vorrichtung aus Notfunkbake und Flugschreiber für ein Luftfahrzeug nach Anspruch 1, 2 oder 3, **dadurch gekennzeichnet, dass** sie aerodynamische Bremsmittel aufweist, die nach einem Auswurf entfaltbar sind.

5. Kombinierte Vorrichtung aus Notfunkbake und Flugschreiber für ein Luftfahrzeug nach einem der vorhergehenden Ansprüche, **dadurch gekennzeichnet, dass** sie Mittel zur Verbindung ohne elektrischen Kontakt, wie etwa optische Mittel und/oder Funkmittel, mit Systemen des Luftfahrzeugs aufweist.

6. Kombinierte Vorrichtung aus Notfunkbake und Flugschreiber für ein Luftfahrzeug nach einem der vorhergehenden Ansprüche, **dadurch gekennzeichnet, dass** sie trennbare Mittel zur elektrischen Verbindung mit Systemen des Luftfahrzeugs aufweist.

7. Kombinierte Vorrichtung aus Notfunkbake und Flugschreiber für ein Luftfahrzeug nach einem der vorhergehenden Ansprüche, **dadurch gekennzeichnet, dass** sie eine kastenförmige Sandwich-Struktur (5) aufweist, in welche die Bake (6a) und der Flugschreiber (6b) integriert sind und welche die gesamten Schwimmmittel oder einen Teil davon bildet.

8. Kombinierte Vorrichtung aus Notfunkbake und Flugschreiber für ein Luftfahrzeug nach einem der vorhergehenden Ansprüche, **dadurch gekennzeichnet, dass** sie Mittel zur Messung einer Beschleunigung und/oder eines Stoßes und/oder einer Sinkgeschwindigkeit und Abwurfmittel, die bei Überschreitung eines Schwellenwertes der Beschleunigung und/oder der Sinkgeschwindigkeit aktiviert werden, aufweist.

9. Kombinierte Vorrichtung aus Notfunkbake und Flugschreiber für ein Luftfahrzeug nach einem der vorhergehenden Ansprüche, **dadurch gekennzeichnet, dass** sie zusätzliche Stromversorgungsmittel aufweist, die durch erneuerbare Energien gespeist werden, insbesondere Windenergie und/oder Energie aus der Bewegung der Wellen.

10. Luftfahrzeug (100), welches eine kombinierte Vorrichtung (1) aus Notfunkbake und Flugschreiber für ein Luftfahrzeug nach einem der vorhergehenden Ansprüche umfasst, **dadurch gekennzeichnet, dass** die Vorrichtung in Form eines Strukturelements des Tragflächenelements (102) des Luftfahrzeugs ausgebildet ist.

11. Luftfahrzeug nach Anspruch 10, **dadurch gekennzeichnet, dass** das Tragflächenelement (102) eine Flosse des Luftfahrzeugs ist.

12. Luftfahrzeug nach einem der Ansprüche 10 und 11, **dadurch gekennzeichnet, dass** es Mittel zur Aufnahme des Gestells der Vorrichtung in Form eines Rahmens umfasst, der ein Strukturelement des Tragflächenelements bildet.

13. Luftfahrzeug nach Anspruch 12, **dadurch gekennzeichnet, dass** der Rahmen in Form eines "U" (105) hergestellt ist, in welchem die Vorrichtung (1) in der Art eines herausnehmbaren Einschubmoduls aufgenommen ist.

## Claims

1. Ejectable and buoyant combined rescue beacon and flight recorder device (1) for an aircraft (100), comprising a foam or honeycomb-type (4) stiffening structure forming a chassis (2), said chassis (2) being provided with at least one outer lateral face provided with a solar panel (3), said device being designed to be positioned in a recess created in a wing element (102) of the aircraft (100), and being formed as an element of an aerodynamic panel (104) on both faces of said wing element (102), the mass/volume ratio of the device (1) granting it its buoyancy.

2. Combined rescue beacon and flight recorder device for an aircraft according to Claim 1, **characterized in that** it comprises a battery (7) for powering the rescue beacon and the flight recorder, connected to the solar panel, the device thus comprising an autonomous power source, whether the device is in its place in the aircraft or ejected.

3. Combined rescue beacon and flight recorder device for an aircraft according to Claim 1 or 2, **characterized in that** its weight/lifting surface ratio is designed to give it lift such that its free fall after ejection is a slowed fall.

4. Combined rescue beacon and flight recorder device for an aircraft according to Claim 1, 2 or 3, **characterized in that** it comprises aerodynamic braking means that can be deployed after ejection.

5. Combined rescue beacon and flight recorder device for an aircraft according to any one of the preceding claims, **characterized in that** it comprises means for connection without electrical contact, such as optical and/or radio means, to systems of the aircraft.

6. Combined rescue beacon and flight recorder device for an aircraft according to any one of the preceding claims, **characterized in that** it comprises disconnectable means for electrical connection to systems of the aircraft.

7. Combined rescue beacon and flight recorder device for an aircraft according to any one of the preceding claims, **characterized in that** it comprises a boxed sandwich structure (5) that integrates the beacon (6a) and the recorder (6b), and forming all or part of said flotation means.

8. Combined rescue beacon and flight recorder device for an aircraft according to any one of the preceding claims, **characterized in that** it comprises means for measuring an acceleration and/or impact and/or fall rate, and jettisoning means that can be activated when a threshold fall rate and/or acceleration value is exceeded.

9. Combined rescue beacon and flight recorder device for an aircraft according to any one of the preceding claims, **characterized in that** it comprises complementary powering means supplied by renewable energy, in particular wind and/or wave power.

10. Aircraft (100) comprising a combined rescue beacon and flight recorder device (1) for an aircraft according to any one of the preceding claims, **characterized in that** said device is formed as a structural element of said wing element (102) of said aircraft.

11. Aircraft according to Claim 10, **characterized in that** said wing element (102) is a vertical stabilizer of the aircraft.

12. Aircraft according to either one of Claims 10 and 11, **characterized in that** it comprises means for receiving the chassis of said device in the form of a frame forming a structural element of the wing element.

13. Aircraft according to Claim 12, **characterized in that** the frame is made in the shape of a U (105) in which the device (1) is received in the manner of a removable drawer.
